# EUROPEAN PATENT SPECIFICATION

(11) **EP 3 305 690 B1**
(45) Date of publication and mention of the grant of the patent: **22.05.2019**
(21) Application number: 16192909.6
(22) Date of filing: 07.10.2016
(51) Int. Cl.: B65G 47/34, G01N 35/04, B07C 3/06, B65G 47/82, B65G 43/08

(54) **SAMPLE CONTAINER HANDLING DEVICE**
PROBENBEHÄLTERHANDHABUNGSVORRICHTUNG
DISPOSITIF DE MANIPULATION DE RÉCIPIENT D'ÉCHANTILLON

(43) Date of publication of application: 11.04.2018
(73) Proprietor: Roche Diagnostics GmbH, 68305 Mannheim (DE); F. Hoffmann-La Roche AG, 4070 Basel (CH)
(72) Inventor: Meier, Reto Andrin, 70374 Stuttgart (DE); Iwan, Alina, 75233 Tiefenbronn (DE)
(74) Representative: Patentanwälte Ruff, Wilhelm, Beier, Dauster & Partner mbB

(56) References cited:
- EP-A1- 2 813 445
- DE-A1- 3 424 360
- DE-A1- 10 007 627
- US-A1- 2004 109 747
- US-A1- 2006 144 764

## Description

### Applicable field and prior art

The invention relates to a sample container handling device comprising a linear transport unit and a release unit.

Known sample container handling devices are adapted to push a sample container being transported by the linear transport unit away from the transport unit using a release blade segment. After the pushing operation, the release blade segment is typically rotated back to an initial position.

US 2004/0109747 A1 discloses a system comprising a linear transport unit being adapted to transport items in a horizontal orientation to a release position, and a release unit comprising a release plate segment, wherein the release unit is configured to rotate the release plate segment around an axis, while the release plate segment is rotating in a constant rotation direction.

DE 34 24 360 A1 discloses an apparatus for sorting out units having an error from a linear transport unit, wherein a spiral segment is used to push the units away from the linear transport unit.

US 2006/0144764 A1 discloses a device for directionally guiding articles of different shapes that are being conveyed on a conveyor off the conveyor with the aid of a movable gate that is controllable to move across the conveyor at an angle to the direction of travel of the article on the conveyor. The gate is made having a means which, upon movement across the conveyor, is designed to forcibly cause the article to be driven along the gate, in a direction corresponding to said angle, off the conveyor and to an exit. Advantageously, the means consists of at least one motor-driven, rotatable disc.

### Object and solution

It is an object of the present invention to provide for a sample container handling device providing for a reliable and fast operation.

This object is achieved by a sample container handling device according to claim 1.

The invention relates to a sample container handling device.

The sample container handling device comprises a linear transport unit being adapted to transport sample containers in horizontal direction to a release position.

The linear transport unit comprises a release unit comprising at least one release blade segment being adapted to abut a respective sample container in the release position along a side line and to actively push the sample container away from the transport unit. The release blade segment can be adapted to push the sample container perpendicularly to the orientation of the sample container and/or perpendicularly to a transport direction of the sample container on the linear transport unit.

The release unit is configured to rotate the release blade segment around an axis such that a plurality of sample containers are sequentially pushed away from the linear transport unit while the release blade segment is rotating in a constant rotational direction.

By means of the inventive sample container handling device a constant rotational direction can be upheld. In prior art embodiments, there exists a risk that a following sample container being transported by the linear transport unit is unintentionally hit by the release blade segment rotating back to its initial position. Due to the constant rotational direction this risk can be avoided. Consequently, the invention significantly improves reliability of operation.

According to an embodiment, the linear transport unit comprises two parallel belts being adapted to move synchronously to transport the sample containers. The belts may move in a constant linear direction in order to transport the sample containers. A belt based linear transport unit is e.g. be disclosed in EP 2 813 445 A1.

According to an embodiment, the axis is a horizontal axis. The axis can be parallel to the transport direction.

The release unit may comprise a further release blade segment, wherein the release blade segment and the further release blade segment are part of a flat release blade. This allows for two push away operations during one 360° turn.

According to an embodiment, the axis is positioned or extends between the release blade segment and the further release blade segment on the release blade.

According to an embodiment, the release unit comprises a plurality of release blades each comprising two release blade segments. This can further increase the number of push away operations during one 360° turn.

The axis may be positioned or may extend between each two release blade segments of each release blade. The release blades may be angularly oriented in equidistant angles. This can simplify operation.

According to an embodiment, each two release blade segments of a respective release blade have equivalent shapes. This can also simplify operation.

The linear transport unit is configured to sequentially transport sample containers to the release position synchronized with the rotation of the release blade segment. The linear transport unit may be configured to sequentially transport sample containers to the release position synchronized with the rotation of the release blade segment such that the sample containers consecutively approaching the release position are pushed away from the transport unit by release blade segments consecutively passing the release position.

According to an embodiment, the sample container handling device comprises an oblique slide which can, for example, be embodied as an inclined plane with a sloping level. The oblique slide may be positioned adjacent to the release position such that a sample container pushed away from the linear transport unit slides downwardly along the oblique slide.

Using an oblique slide may help stabilizing movement of the pushed away sample containers and can direct them to a specific position for further handling.

According to an embodiment, the release blade segments or the release blades are made of aluminum or plastic material. Such materials have been proven suitable for typical applications.

The release unit comprises a first sensor, e.g. a fork light barrier, for sensing the rotational position of the release blade segment. This can e.g. support synchronizing the rotation of the release blade segment or of the release blades with the operation of the linear transport unit.

The linear transport unit comprises a second sensor, e.g. a capacitive sensor, for detecting presence of a sample container in the release position. This can support controlling and synchronizing operation.

According to an embodiment, the release unit is configured to rotate the release blade segment responsive to the second sensor detecting presence of a sample container in the release position. This allows for a reliable and efficient operation.

Conventional release blade segments are operated in a manner similar to a pendulum, meaning that the release blade segments rotate from a starting position to a release position, rotate back to the starting position and so forth. It has been found that such an operation can cause problems in that a following sample container is unintentionally hit when the release blade segment rotates back to its starting position. This problem can be avoided by rotating the release blade segment only in one direction, i.e. avoiding a change in the rotational direction.

### Brief description of the drawing

The invention will now be described in detail with respect to the enclosed drawings.
- Fig. 1: shows a sample container handling device according to a first embodiment of the invention and
- Fig. 2: shows a sample container handling device according to a further embodiment of the invention.

### Detailed description of the embodiment

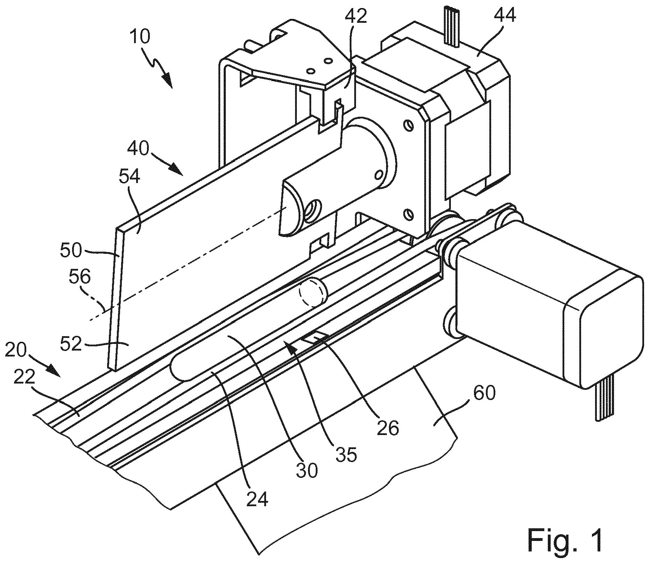

Fig. 1 shows a sample container handling device 10 according to a first embodiment of the invention.

The sample container handling device 10 comprises a linear transport unit 20. The linear transport unit 20 comprises a first belt 22 and a second belt 24. The belts 22, 24 extend in parallel to each other and are adapted to move synchronously to the right side of fig. 1 in order to transport sample containers 30. The sample containers 30 are lying in a horizontal orientation on the belts 22, 24.

One sample container 30 is shown exemplarily in fig. 1. It is positioned in a release position 35 from which it may be released in a manner discussed further below.

The linear transport unit 20 further comprises a first sensor in form of a capacitive sensor 26 positioned below the release position 35. The capacitive sensor 26 is adapted to detect presence of a sample container 30 in the release position 35 so that a release operation can be initiated. By means of the release operation the sample container 30 is pushed from the linear transport unit 20.

For releasing the sample container 30, the sample container handling device 10 comprises a release unit 40. The release unit 40 comprises a release blade 50. The release blade 50 comprises a first release blade segment 52 and a second release blade segment 54, which together form the release blade 50. The release blade segments 52, 54 are separated by an axis 56. The axis 56 is oriented in a horizontal direction and forms a rotational axis of the release blade 50.

The release unit 40 further comprises an electric motor 44 being adapted to rotate the release blade 50 around its axis 56. The electric motor 54 is adapted to rotate the release blade 50 in a constant rotational direction.

The release unit 40 further comprises a second sensor in form of a release blade sensor 42 being embodied as a fork light barrier. The release blade sensor 42 is adapted to detect presence of a release blade segment 52, 54 in order to control rotation of the release blade 50. Adjacent to the release position 35, an oblique slide 60 is arranged. When the electric motor 54 rotates the release blade 50 the sample container 30 is pushed away from the linear transport unit 20 towards the oblique slide 60 and then slides down the oblique slide 60 to a position where the sample container 30 is further processed.

The linear transport unit 20 sequentially transports sample containers 30 to the release position 35. The release blade 50 is rotated by the motor 44 synchronized with the operation of the linear transport unit 20. In order to synchronize the operation the sensors 26, 42 are used.

Every time a sample container 30 is positioned at the release position 35, one of the two release blade segments 52, 54 abuts the sample container 30 along its side line. With further rotation of the release blade 50, the respective sample container 30 is pushed away from the belts 22, 24 in a perpendicular direction with reference to the transportation direction of the linear transport unit 20. The sample container 30 then falls on the oblique slide 60 and slides away to the next handling place.

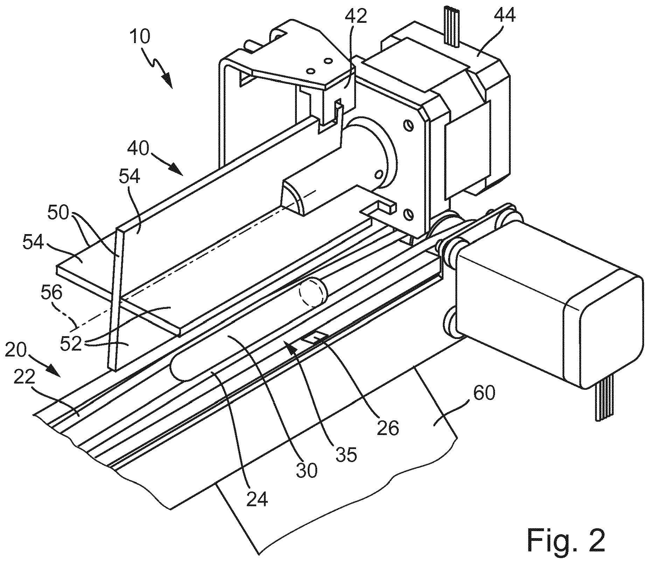

Fig. 2 shows a sample container handling device 10 according to a further embodiment of the invention. Elements having the same function as elements already depicted in Fig. 1 are denoted with equal reference signs.

The release unit 40 of the embodiment shown in Fig. 2 comprises a second release blade 50 having two release blade segments 52, 54 having equivalent shapes. Both release blades 50 are angularily oriented with equidistant angles here 90 degrees.

## Claims

1. Sample container handling device (10), comprising
- a linear transport unit (20) being adapted to transport sample containers (30) in horizontal orientation to a release position (35), and
- a release unit (40) comprising a release blade segment (52, 54) being adapted to abut a respective sample container (30) in the release position (35) along a side line and to push the sample container (30) away from the transport unit (20),
- wherein the release unit (40) is configured to rotate the release blade segment (52, 54) around an axis (56) such that a plurality of sample containers (30) are sequentially pushed away from the linear transport unit (20) while the release blade segment (52, 54) is rotating in a constant rotational direction,
**characterized in that**
- the linear transport unit (20) is configured to sequentially transport sample containers (30) to the release position (35) synchronized with the rotation of the release blade segment (52, 54), and **in that**
- the release unit (40) comprises a first sensor (42) for sensing the rotational position of the release blade segment (52, 54), and **in that**
- the linear transport unit (20) comprises a second sensor (26) for detecting presence of a sample container (30) in the release position (35).

2. Sample container handling device (10) according to claim 1,
**characterized in that**
- the linear transport unit (20) comprises two parallel belts (22, 24) being adapted to move synchronously to transport the sample containers (30).

3. Sample container handling device (10) according to one of the preceding claims,
**characterized in that**
- the axis (56) is a horizontal axis.

4. Sample container handling device (10) according to one of the preceding claims, **characterized in that**
- the release unit (40) comprises a further release blade segment (54), wherein the release blade segment (52) and the further release blade segment (54) are part of a flat release blade (50).

5. Sample container handling device (10) according to claim 4,
**characterized in that**
- the axis (56) is positioned between the release blade segment (52) and the further release blade segment (54) on the release blade (50).

6. Sample container handling device (10) according to one of the preceding claims, **characterized in that**
- the release unit (40) comprises a plurality of release blades (50) each comprising two release blade segments (52, 54).

7. Sample container handling device (10) according to claim 6,
**characterized in that**
- the axis (56) is positioned between each two release blade segments (52, 54) of each release blade (50).

8. Sample container handling device (10) according to claim 6 or 7,
**characterized in that**
- the release blades (50) are angularily oriented with equidistant angles.

9. Sample container handling device (10) according to one of claims 4 to 8,
**characterized in that**
- each two release blade segments (52, 54) of a respective release blade (50) have equivalent shapes.

10. Sample container handling device (10) according to one of the preceding claims, **characterized in that**
- the sample container handling device (10) comprises an oblique slide (60) positioned adjacent to the release position (35) such that a sample container (30) pushed away from the linear transport unit (20) slides downwardly along the oblique slide (60).

11. Sample container handling device (10) according to one of the preceding claims, **characterized in that**
- the release blade segments (52, 54) or the release blades (50) are made of aluminum or plastic material.

12. Sample container handling device (10) according to claim 1, **characterized in that**
- the release unit (40) is configured to rotate the release blade segment (52, 54) responsive to the second sensor (26) detecting presence of a sample container (30) in the release position (35).

## Patentansprüche

1. Probenbehälterhandhabungsvorrichtung (10), aufweisend
- eine lineare Transporteinheit (20), die dazu ausgebildet ist, Probenbehälter (30) in horizontaler Orientierung zu einer Freigabeposition (35) zu transportieren, und
- eine Freigabeeinheit (40), die ein Freigabeschiebersegment (52, 54) aufweist, das dazu ausgebildet ist, dass es sich an einen jeweiligen Probenbehälter (30) in der Freigabeposition (35) entlang einer Seitenlinie anlegt und den Probenbehälter (30) von der Transporteinheit (20) weg schiebt,
- wobei die Freigabeeinheit (40) so gestaltet ist, dass sie das Freigabeschiebersegment (52, 54) derart um eine Achse (56) dreht, dass eine Mehrzahl von Probenbehältern (30) sequentiell von der linearen Transporteinheit (20) weg geschoben werden, während sich das Freigabeschiebersegment (52, 54) in einer konstanten Drehrichtung dreht,
**dadurch gekennzeichnet, dass**
- die lineare Transporteinheit (20) so gestaltet ist, dass sie in Synchronisation mit der Drehung des Freigabeschiebersegments (52, 54) Probenbehälter (30) sequentiell zur Freigabeposition (35) transportiert, und dadurch, dass
- die Freigabeeinheit (40) einen ersten Sensor (42) zum Erkennen der Drehposition des Freigabeschiebersegments (52, 54) aufweist, und dadurch, dass
- die lineare Transporteinheit (20) einen zweiten Sensor (26) zum Erfassen des Vorliegens eines Probenbehälters (30) in der Freigabeposition (35) aufweist.

2. Probenbehälterhandhabungsvorrichtung (10) nach Anspruch 1, **dadurch gekennzeichnet, dass**
- die lineare Transporteinheit (20) zwei parallele Bänder (22, 24) aufweist, die dazu ausgebildet sind, dass sie sich synchron bewegen, um die Probenbehälter (30) zu transportieren.

3. Probenbehälterhandhabungsvorrichtung (10) nach einem der vorhergehenden Ansprüche, **dadurch gekennzeichnet, dass**
- es sich bei der Achse (56) um eine horizontale Achse handelt.

4. Probenbehälterhandhabungsvorrichtung (10) nach einem der vorhergehenden Ansprüche, **dadurch gekennzeichnet, dass**
- die Freigabeeinheit (40) ein weiteres Freigabeschiebersegment (54) aufweist, wobei das Freigabeschiebersegment (52) und das weitere Freigabeschiebersegment (54) als Teil eines ebenen Freigabeschiebers (50) ausgebildet sind.

5. Probenbehälterhandhabungsvorrichtung (10) nach Anspruch 4, **dadurch gekennzeichnet, dass**
- die Achse (56) zwischen dem Freigabeschiebersegment (52) und dem weiteren Freigabeschiebersegment (54) auf dem Freigabeschieber (50) positioniert ist.

6. Probenbehälterhandhabungsvorrichtung (10) nach einem der vorhergehenden Ansprüche, **dadurch gekennzeichnet, dass**
- die Freigabeeinheit (40) eine Mehrzahl von Freigabeschiebern (50) aufweist, die jeweils zwei Freigabeschiebersegmente (52, 54) umfassen.

7. Probenbehälterhandhabungsvorrichtung (10) nach Anspruch 6, **dadurch gekennzeichnet, dass**
- die Achse (56) zwischen jeweils zwei Freigabeschiebersegmenten (52, 54) jedes Freigabeschiebers (50) positioniert ist.

8. Probenbehälterhandhabungsvorrichtung (10) nach Anspruch 6 oder 7, **dadurch gekennzeichnet, dass**
- die Freigabeschieber (50) in einer gewinkelten Orientierung mit gleichen Winkelabständen angeordnet sind.

9. Probenbehälterhandhabungsvorrichtung (10) nach einem der Ansprüche 4 bis 8, **dadurch gekennzeichnet, dass**
- jeweils zwei Freigabeschiebersegmente (52, 54) eines zugehörigen Freigabeschiebers (50) die gleiche Form aufweisen.

10. Probenbehälterhandhabungsvorrichtung (10) nach einem der vorhergehenden Ansprüche, **dadurch gekennzeichnet, dass**
- die Probenbehälterhandhabungsvorrichtung (10) eine schräge Gleitbahn (60) aufweist, die angrenzend an die Freigabeposition (35) derart positioniert ist, dass ein von der linearen Transporteinheit (20) weg geschobener Probenbehälter (30) an der schrägen Gleitbahn (60) entlang nach unten gleitet.

11. Probenbehälterhandhabungsvorrichtung (10) nach einem der vorhergehenden Ansprüche, **dadurch gekennzeichnet, dass**
- die Freigabeschiebersegmente (52, 54) oder die Freigabeschieber (50) aus Aluminium oder Plastikmaterial gebildet sind.

12. Probenbehälterhandhabungsvorrichtung (10) nach Anspruch 1, **dadurch gekennzeichnet, dass**
- die Freigabeeinheit (40) derart gestaltet ist, dass sie das Freigabeschiebersegment (52, 54) in Abhängigkeit vom zweiten Sensor (26), der das Vorliegen eines Probenbehälters (30) in der Freigabeposition (35) erfasst, in Drehung versetzt.

## Revendications

1. Dispositif (10) de manipulation de récipients à échantillons, comportant
- une unité (20) de transport linéaire qui est conçue pour transporter des récipients (30) à échantillons dans une orientation horizontale jusqu'à une position (35) de libération, et
- une unité (40) de libération comportant un segment (52, 54) de lame de libération qui est conçu pour s'appuyer contre un récipient respectif (30) à échantillon dans la position (35) de libération suivant une ligne latérale et pour écarter le récipient (30) à échantillon de l'unité (20) de transport,
- l'unité (40) de libération étant configurée pour faire pivoter le segment (52, 54) de lame de libération autour d'un axe (56) de telle façon qu'une pluralité de récipients (30) à échantillons sont écartés séquentiellement de l'unité (20) de transport linéaire tandis que le segment (52, 54) de lame de libération pivote dans un sens de rotation constant,
**caractérisé en ce que**
- l'unité (20) de transport linéaire est configurée pour transporter séquentiellement des récipients (30) à échantillons jusqu'à la position (35) de libération en synchronisme avec la rotation du segment (52, 54) de lame de libération, et **en ce que**
- l'unité (40) de libération comporte un premier capteur (42) servant à détecter la position angulaire du segment (52, 54) de lame de libération, et **en ce que**
- l'unité (20) de transport linéaire comporte un deuxième capteur (26) servant à détecter la présence d'un récipient (30) à échantillon dans la position (35) de libération.

2. Dispositif (10) de manipulation de récipients à échantillons selon la revendication 1,
**caractérisé en ce que**
- l'unité (20) de transport linéaire comporte deux courroies parallèles (22, 24) qui sont conçues pour se déplacer de manière synchrone pour transporter les récipients (30) à échantillons.

3. Dispositif (10) de manipulation de récipients à échantillons selon l'une des revendications précédentes,
**caractérisé en ce que**
- l'axe (56) est un axe horizontal.

4. Dispositif (10) de manipulation de récipients à échantillons selon l'une des revendications précédentes,
**caractérisé en ce que**
- l'unité (40) de libération comporte un segment supplémentaire (54) de lame de libération, le segment (52) de lame de libération et le segment supplémentaire (54) de lame de libération faisant partie d'une lame plate (50) de libération.

5. Dispositif (10) de manipulation de récipients à échantillons selon la revendication 4,
**caractérisé en ce que**
- l'axe (56) est positionné entre le segment (52) de lame de libération et le segment supplémentaire (54) de lame de libération sur la lame (50) de libération.

6. Dispositif (10) de manipulation de récipients à échantillons selon l'une des revendications précédentes, **caractérisé en ce que**
- l'unité (40) de libération comporte une pluralité de lames (50) de libération comportant chacune deux segments (52, 54) de lame de libération.

7. Dispositif (10) de manipulation de récipients à échantillons selon la revendication 6, **caractérisé en ce que**
- l'axe (56) est positionné entre chaque paire de segments (52, 54) de lame de libération de chaque lame (50) de libération.

8. Dispositif (10) de manipulation de récipients à échantillons selon la revendication 6 ou 7, **caractérisé en ce que**
- les lames (50) de libération sont orientées angulairement suivant des angles équidistants.

9. Dispositif (10) de manipulation de récipients à échantillons selon l'une des revendications 4 à 8, **caractérisé en ce que**
- chaque paire de segments (52, 54) de lame de libération d'un respective lame (50) de libération présente des formes équivalentes.

10. Dispositif (10) de manipulation de récipients à échantillons selon l'une des revendications précédentes, **caractérisé en ce que**
- le dispositif (10) de manipulation de récipients à échantillons comporte une glissière oblique (60) positionnée de façon adjacente à la position (35) de libération de telle façon qu'un récipient (30) à échantillon écarté de l'unité (20) de transport linéaire glisse vers le bas le long de la glissière oblique (60).

11. Dispositif (10) de manipulation de récipients à échantillons selon l'une des revendications précédentes, **caractérisé en ce que**
- les segments (52, 54) de lame de libération ou les lames (50) de libération sont constitués d'aluminium ou de matière plastique.

12. Dispositif (10) de manipulation de récipients à échantillons selon la revendication 1, **caractérisé en ce que**
- l'unité (40) de libération est configurée pour faire pivoter le segment (52, 54) de lame de libération en réaction à la détection, par le deuxième capteur (26), de la présence d'un récipient (30) à échantillon dans la position (35) de libération.
